# EUROPÄISCHE PATENTSCHRIFT

(11) **EP 2 262 843 B1**
(45) Veröffentlichungstag und Bekanntmachung des Hinweises auf die Patenterteilung: **10.07.2013**
(21) Anmeldenummer: 09726954.2
(22) Anmeldetag: 27.03.2009
(51) Int. Cl.: C08G 18/70, C08G 18/76, C08K 5/21, C08G 18/42

(54) **HOTMELTS**
HOT MELTS
COLLES THERMOFUSIBLES

(30) Priorität: 03.04.2008 DE 102008017036
(43) Veröffentlichungstag der Anmeldung: 22.12.2010
(73) Patentinhaber: Bayer Intellectual Property GmbH, 40789 Monheim (DE)
(72) Erfinder: LEIMENSTOLL, Marc, Christian, 41539 Dormagen (DE); DÖRR, Sebastian, 40597 Düsseldorf (DE); KARAFILIDIS, Christos, 51375 Leverkusen (DE); REICHERT, Peter, 41541 Dormagen (DE)
(74) Vertreter: BIP Patents
(86) Internationale Anmeldenummer: PCT/EP2009/002259
(87) Internationale Veröffentlichungsnummer: WO 2009/121527

(56) Entgegenhaltungen:
- EP-A- 0 354 527
- WO-A-2005/063873

## Beschreibung

Die vorliegende Erfindung betrifft reaktive Zubereitungen enthaltend isocyanatfunktionelle Polyurethanbausteine. Diese unter anderem als Hotmelts verwendbaren Zubereitungen weisen einen beschleunigten Aufbau von Anfangsfestigkeiten und höhere mechanische Festigkeiten auf.

Reaktive Polyurethan-Zubereitungen sind eine stark wachsende Produktgruppe innerhalb der Anwendungen von Polyurethanen als Beschichtungsmittel, Schaumstoff, Dichtstoff und insbesondere als Schmelzklebstoff, auch Hotmelt genannt.

Für ihren Aufbau werden vorzugsweise lineare Polyester- und/oder Polyetherpolyole in Kombination mit einem Überschuss von Polyisocyanaten, vorzugsweise Diisocyanaten verwendet.

Die Vorteile dieser Produktklasse liegt vor allem in der Abwesenheit von Lösungsmittel, der Möglichkeit die Produkte in der Wärme mit relativ niedrigen Viskositäten zu applizieren, trotzdem hohe Anfangsfestigkeiten zu erhalten und nach relativ kurzer Zeit wegen der weiteren Reaktion mit Feuchtigkeit Klebverbindungen mit sehr hohem, weit über den Applikationstemperaturen liegendem Wärmestand und exzellenten Lösemittelbeständigkeiten zu erhalten.

Wesentlich für das gute Eigenschaftsprofil der reaktiven Polyurethan-Hotmelts ist ihre Fähigkeit, beim Abkühlen sehr schnell Kohäsionsfestigkeiten (Anfangsfestigkeiten) aufzubauen, die ein Handhaben der gefügten Teile unmittelbar nach dem Fügen erlaubt. Für viele Anwendungen ist dabei ein besonders rascher Festigkeitsaufbau notwendig, um beispielsweise bei kurzen Taktzeiten eine zügige Weiterverarbeitung zu ermöglichen oder Rückstellkräfe der Substrate aufnehmen zu können, ohne dass Ablöseerscheinungen auftreten.

Für den Aufbau der Anfangsfestigkeiten sind - wie bei allen Hotmelts - nur physikalische Phänomene verantwortlich, da im Sekunden- bzw. Minutenbereich noch keine wesentlichen chemischen Vorgänge ablaufen. Bei diesen physikalischen Vorgängen handelt es sich zum Einen um den starken, kontinuierlich verlaufenden Viskositätsanstieg der sich durch Temperaturerniedrigung ergibt, zum Anderen - bei Verwendung kristalliner Komponenten - um einen Rekristallisationseffekt, der zu einem Sprung in der Zunahme der Festigkeit führt.

Die eigentliche Aushärtung der reaktiven PUR-Hotmelts, d. h. Vernetzungsreaktion der Komponenten miteinander, erfolgt innerhalb von Stunden bis Tagen durch Reaktion der Isocyanatgruppen mit Wasser aus der Umgebung oder den miteinander verklebten Substraten zu Polyharnstoff. Die PUR-Hotmelts sind danach nur noch bedingt schmelzbar oder in Lösemitteln löslich. Aufgrund dessen haben die ausgehärteten Klebstoffe eine gute Wärmefestigkeit und Beständigkeit gegen Chemikalien wie Weichmacher, Lösemittel, Öle oder Kraftstoffe.

Um rasch Anfangsfestigkeit aufzubauen, wird bei reaktiven PUR Hotmelts auf Polyole zurückgegriffen, deren Konzentration im Hotmelt genügend hoch ist und deren Übergang erster bzw. zweiter Ordnung (Tm bzw. Tg) bei relativ hohen Temperaturen liegt. Dabei ist darauf zu achten, dass der Übergang erster bzw. zweiter Ordnung auch in einem formulierten Hotmelt erfolgt und nicht durch z.B. Mischbarkeit des kristallisierenden Polyols im Gesamtsystem unterdrückt wird.

Hotmelts auf Basis kristalliner Polyester wie z.B. in DE-A 3 827 224 (entsprechend EP-A 0 354 527) beschrieben zeichnen sich durch eine sehr kurze offenen Zeit und einen damit verbundenen schnellen Aufbau von Anfangsfestigkeit aus. Dies wird erzielt durch den Einsatz von Estern auf Basis von Dodekandisäure, die dadurch bekannt sind, dass sie eine sehr schnelle Rekristallisationskinetik und einen hohen Schmelzpunkt haben.

Aus der WO2005/066256 ist bekannt, dass Übergangstemperaturen sowie Rekristallisationsenthalpien von hochmolekularen, teilkristallinen, thermoplastischen Polymeren, wie z.B. Polyolefinen oder Polyestern durch Zusatz von Nucleierungsmitteln erhöht werden kann. Dadurch lassen sich z.B. die Entformbarkeit und damit die Zykluszeiten beim Spritzgießen verbessern.

Der Effekt von Nucleierungsmittel auf die Anfangsfestigkeit von hochmolekularen lösemittelhaltigen thermoplastischen Polyurethanelastomeren wurde in der Veröffentlichung ,Initial Bond Strength of Polyurethane Contact Adhesives' (Adv. Urethane Sci. Tec., 1992, 11, 192-216) beschrieben.

Über die Auswirkung von Nanoharnstoffen auf das Rekristallisationsverhalten von niedermolekularen NCO-terminierten Prepolymeren enthaltend kristalline bzw. teilkristalline und/oder amorphe Polyolkomponenten ist jedoch bisher nichts bekannt.

Die der Erfindung zugrunde liegende Aufgabe war, Formulierungen von reaktiven Polyurethan-Hotmelts so zu modifizieren, dass ein schnellerer Anfangsfestigkeitsautbau erfolgt. Dies sollte dadurch erreicht werden, dass die Formulierung eine höhere Rekristallisationstemperatur der kristallinen und/oder teilkristallinen Polyolkomponente im reaktiven Polyurethan Hotmelt hat.

Es wurde überraschend gefunden, dass die nachstehend näher bezeichneten Hotmeltsysteme auf Basis von kristallinen oder teilkristallinen Polyesterpolyolen, oder Mischungen dieser mit kristallinen, teilkristallinen, amorphen, flüssigen Polyolen oder anderer Komponenten durch Modifikation mit Nanoharnstoffen sich im Vergleich zu Formulierungen ohne Modifikation mit Nanoharnstoffen durch einen besonders raschen Aufbau der Anfangsfestigkeit auszeichnen.

Dies ist insbesondere überraschend, da sich die Rekristallisationstemperaturen der reinen Polyester mit und ohne Zugabe von Nanoharnstoffen kaum unterscheiden und sich die Rekristallisationsenthalpie mit zunehmendem Gehalt an Nanoharnstoff verringert (Tabelle 2).

Gegenstand der Erfindung sind Zubereitungen auf Basis von Reaktionsprodukten von (A) Isocyanaten mit (B) kristallinen oder teilkristallinen Polyesterpolyolen, gegebenenfalls in Abmischung mit kristallinen, teilkristallinen, amorphen oder flüssigen Polyolen anderer Art oder anderen Komponentenenthaltend mindestens ein Umsetzungsprodukt von
A) mindestens einem aromatischen, aliphatischen, araliphatischen und/oder cycloaliphatischen Isocyanat, bevorzugt mit einem Gehalt an freien NCO-Gruppen von 5 bis 60 Gew.-% (bezogen auf A)
   und
B) einem Polyol bzw. Polyolgemisch enthaltend mindestens ein Polyol sowie 0,001 bis 50 Gew.% bzgl. der Gesamtmenge B) an Nanoharnstoff, wobei das Verhältnis von A zu B so gewählt wird, dass das molare Verhältnis von NCO zu OH > 1 beträgt.

Die Herstellung der Zusammensetzungen erfolgt beispielsweise derart, dass die Polyole B) und die Isocyanate A) vermischt werden, wobei das Verhältnis von A zu B so gewählt wird, dass das molare Verhältnis von NCO zu OH > 1, bevorzugt von 1,2 bis 4,0, besonders bevorzugt von 1,3 bis 3,0 beträgt und die homogene Mischung abgefüllt wird oder bis zum Erhalt eines konstanten NCO-Wertes gerührt wird und dann abgefüllt wird. Als bevorzugte Reaktionstemperatur werden 60 bis 150°C, vorzugsweise 80 bis 130°C gewählt. Die Herstellung der Zubereitungen kann auch kontinuierlich in einer Rührkesselkaskade oder geeigneten Mischaggregaten, wie beispielsweise schnell drehenden Mischern nach dem Rotor-Stator-Prinzip oder einem Statikmischer, erfolgen.

Es ist auch möglich, die Polyole bzw. Polyolgemisch B) oder einen Teil derselben mit einem Unterschuss an A), zu modifizieren und nach beendeter Reaktion die urethangruppenhaltigen Polyole mit einem Überschuss von A) zu einer Isocyanatgruppen enthaltenden Zusammensetzung umzusetzen.

Ebenso ist es möglich, die Umsetzung der Polyole B) mit den Isocyanaten A) in Gegenwart von bis zu 5 Gew.-% von beispielsweise Trimerisaten aliphatischer und/oder aromatischer Diisocyanate, wie z.B. HDI, durchzuführen oder solche Trimerisate nach beendeter Prepolymerisation zuzusetzen.

Gegenstand der Erfindung sind auch Zubereitungen, welche die erfindungsgemäßen Zusammensetzungen enthalten, bzw. die Verwendung der erfindungsgemäßen Zusammensetzungen als bzw. in z. B. Dichtstoffen, Beschichtungsmitteln, Schaumstoffen, sowie als Klebstoffe, insbesondere Schmelzklebstoffe, wie z. B. als Montageklebstoff zur vorläufigen Fixierung von Bauteilen, allgemein als Papierklebstoff, speziell als Buchbindeklebstoff oder Klebstoffe für die Herstellung von Kreuzbodenventilsäcken, Verbundfolien oder Laminaten oder als Kantenumleimer, oder bei deren Herstellung.

Die erfindungsgemäßen Zubereitungen können mit die Reaktion mit Feuchtigkeit aktivierenden Katalysatoren, weiteren anorganischen oder organischen Füllstoffen, Nucleierungsmitteln, Additiven, Hilfsstoffen, Tensiden, Farbstoffen, Harzen, reaktiven und nichtreaktiven Polymeren, Stabilisatoren, Lichtschutzmitteln, Oxidationsschutzmitteln, Bioziden, Pigmenten. und/oder Streckölen in üblicher Weise modifiziert werden.

Als Isocyanatkomponente A) geeignete Isocyanate sind beispielsweise solche mit Isocyanatgehalten von 5 bis 60 Gew.-% (bezogen auf das Isocyanat) mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und/oder 2,6-Diisocyanatotoluol (TDI), 2,2'-, 2,4'- und/oder 4,4'-Diisocyanatodiphenylmethan (MDI), 1,5-Diisocyanatonaphthalin, 1,3- und 1,4-Bis-(isocyanatomethyl)-benzol oder Mischungen dieser. Selbstverständlich können auch Polyisocyanate verwendet werden, bei denen es sich beispielsweise um höhermolekulare Verbindungen mit Isocyanurat-, Urethan-, Allophanat-, Biuret-, Iminooxadiazintrion-, Oxadiazintrion- und/oder Uretdiongruppen auf Basis der vorgenannten Diisocyanate handelt.

Als Iscocyanatkomponente A) bevorzugte Diisocyanate sind 1,6-Diisocyanatohexan (HDI), 1-Isocyanato-3,3,5-trimethyl-5-isocyanatomethylcyclohexan (Isophorondiisocyanat, IPDI), 4,4'-Diisocyanatodicyclohexylmethan, 2,4- und/oder 2,6-Diisocyanatotoluol (TDI), 2,2'-, 2,4'- und/oder 4,4'-Diisocyanatodiphenylmethan (MDI).

Als Iscocyanatkomponente A) besonders bevorzugte Diisocyanate sind 2,4'- oder 4,4'-Diisocyanatodiphenylmethan (MDI) und/oder einer Mischung aus diesen.

Unter einem Polyol bzw. einem Polyolgemisch B) wird im Rahmen der vorliegenden Erfindung ein Polyol mit mehr als einer OH-Gruppe, bevorzugt zwei endständigen OH-Gruppen verstanden. Solche Polyole sind dem Fachmann bekannt. Bevorzugt werden Polyesterpolyole. Sie können auf bekanntem Wege hergestellt werden, beispielsweise aus aliphatischen Hydroxycarbonsäuren oder aus aliphatischen und/oder aromatischen Dicarbonsäuren und einem oder mehreren Diolen. Es können auch entsprechende Derivate eingesetzt werden, wie z.B. Lactone, Ester von niederen Alkoholen oder Anhydride. Beispiele für geeignete Ausgangsprodukte sind Bernsteinsäure, Adipinsäure, Korksäure, Azelainsäure, Sebazinsäure, Dodecandisäure, Glutarsäure, Glutarsäureanhydrid, Phthalsäure, Isophthalsäure, Terephthalsäure, Phthalsäureanhydrid, Ethylenglykol, Diethylenglykol, 1,4-Butandiol, 1,6- Hexandiol, Neopentylglykol, ε-Caprolacton.

Polyesterpolyole sind bei Raumtemperatur entweder flüssig (Glasübergangstemperatur Tg < 20°C) oder fest. Bei Raumtemperatur feste Polyesterpolyole sind dabei entweder amorph (Glasübergangstemperatur Tg > 20°C) oder kristallisierend.

Geeignete kristallisierende Polyester sind beispielsweise solche auf Basis linearer aliphatischer Dicarbonsäuren mit mindestens 2 Kohlenstoffatomen, bevorzugt mindestens 6 Kohlenstoffatomen, besonders bevorzugt 6 bis 14 Kohlenstoffatomen im Molekül wie z.B. Adipinsäure, Azelainsäure, Sebacinsäure und Dodecandisäure, vorzugsweise Adipinsäure und Dodecandisäure und linearen Diolen mit mindestens 2 Kohlenstoffatomen, bevorzugt mindestens 4 Kohlenstoffatomen, besonders bevorzugt 4 - 6 Kohlenstoffatomen im Molekül, vorzugsweise mit einer geraden Anzahl von Kohlenstoffatomen wie beispielsweise 1,4-Butandiol und 1,6-Hexandiol. Ebenso sind die Polycaprolactonderivate basierend auf bifunktionellen Startmolekülen wie beispielsweise 1,6-Hexandiol als besonders geeignet zu nennen.

Geeignete amorphe Polyesterpolyole sind beispielsweise solche auf Basis von Adipinsäure, Isophthalsäure, Terephthalsäure, Ethylenglykol, Neopentylglykol und 3-Hydroxy-2,2- dimethylpropyl-3-hydroxy-2,2-dimethylpropanoat.

Geeignete bei Raumtemperatur flüssige Polyesterpolyole sind beispielsweise solche auf Basis von Adipinsäure, Ethylenglykol, 1,6-Hexandiol und Neopentylglykol.

Als Polyetherpolyol geeignet sind die in der Polyurethan-Chemie üblichen Polyether, wie beispielsweise die unter Verwendung von zwei- bis sechswertigen Startermolekülen wie beispielsweise Wasser, Ethylenglykol, 1,2- oder 1,3-Propylenglykol, Neopentylglykol, Glycerin, Trimethylolpropan, Pentaerythrit, Sorbit oder 1- bis 4-NH-Bindungen aufweisenden Aminen hergestellten Additions- oder Mischadditionsverbindungen des Tetrahydrofurans, Styroloxids, Ethylenoxids, Propylenoxids, der Butylenoxide oder des Epichlorhydrins, vorzugsweise des Ethylenoxids und/oder des Propylenoxids. Vorzugsweise sind die bifunktionellen Propylenoxid- und/oder Ethylenoxid-Addukte sowie Polytetrahydrofuran zu nennen. Solche Polyetherpolyole und ihre Herstellung sind dem Fachmann bekannt.

Nanoharnstoffe sind dispergierte quervernetze, nanoskalige Polyharnstoffpartikel. Die Herstellung wässriger Nanoharnstoff-Dispersionen wird WO-A 2005/063873 beschrieben. Dabei werden hydrophile Isocyanate in Gegenwart eines Katalysators in Wasser gegeben, wodurch eine Quervernetzung innerhalb der dispergierten Partikel durch Harnstoff-Bindungen stattfindet.

Die Herstellung von Polyol bzw. Polyolgemisch B) enthaltend Nanoharnstoffe wird in DE-A 100 200 700 4769 beschrieben. Es handelt sich dabei um quervernetzte Nanoharnstoffpartikel und mindestens ein Dispergiermedium, welches mindestens eine, bevorzugt zwei, gegenüber Isocyanatgruppen reaktive Gruppe(n) aufweist, wobei der Wasser-Anteil, bezogen auf die Dispersion 0 bis 5 Gew.-% beträgt.

Beispiele für die beschriebenen Dispergiermedien sind Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole oder Polyesterpolycarbonatpolyole.

Als Dispergiermedium bevorzugt sind Substanzen, die sich mit wässrigen Nanoharnstoff-Dispersionen vermischen lassen und aus deren Mischung mit der wässrigen Nanoharnstoff-Dispersion sich das Wasser entfernen lässt, wie z.B. Polyesterpolyole, Polycarbonatpolyole, Polyetherpolyole und kurzkettige Polyole.

Beispiele für geeignete kurzkettige Polyole sind Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A, (2,2-Bis(4-hydroxycyclohexyl)propan), Trimethylolpropan, Glycerin, Pentaerythrit oder Hydroxypivalinsäureneopentylglykolester. Bevorzugte kurzkettige Polyole sind 1,4 - oder 1,3-Butandiol, 1,6-Hexandiol oder Trimethylolpropan.

Beispiele für geeignete für monofunktionelle Alkohole sind Ethanol, n-Butanol, n-Propanol, Ethylenglykolmonobutylether (2-Butoxy-ethanol), Diethylenglykolmonomethylether, Propylenglykolmonomethylther, Dipropylenglykol-monomethylether, Tripropylenglykolmonomethylether, Dipropylenglykolmonopropylether, Propylenglykolmonobutylether, Dipropylenglykolmonobutylether, Tripropylenglykolmonobutylether, 2-Ethylhexanol, 1-Octanol, 1-Dodecanol, 1-Hexadecanol, Diacetonalkohol, Benzylalkohol, Amylalkohol, Cyclohexanol, Furfurylalkohol o-Kresol, m-Kresol, p-Kresol, und Phenol. Bevorzugte monofunktionelle Alkohole sind Ethylenglykolmonobutylether, Diacetonalkohol, Amylalkohol oder Cyclohexanol.

Als Dispergiermedium sind besonders bevorzugt Polyesterpolyole, wie beispielsweise die an sich bekannten Polykondensate aus Di- sowie gegebenenfalls Tri- und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester, wobei Hexandiol(1,6) und Isomere, Neopentylglykol und Hydroxypivalinsäureneopenthylglykolester bevorzugt sind. Daneben können auch Polyole wie Trimethylolpropan, Glycerin, Erythrit, Pentaerythrit, Triemthylolbenzol oder Trishydroxyethylisocyanurat eingesetzt werden. Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dimethylbernsteinsäure eingesetzt werden. Als Säurequelle können auch die entsprechenden Anhydride verwendet werden. Sofern die mittlere Funktionalität des zu veresternden Polyols > als 2 ist, können zusätzlich auch Monocarbonsäuren, wie Benzoesäure und Hexancarbonsäure mit verwendet werden. Bevorzugte Säuren sind aliphatische oder aromatische Säuren der vorstehend genannten Art. Besonders bevorzugt sind Adipinsäure, Isophthalsäure und gegebenenfalls Trimellithsäure. Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Besonders bevorzugte Polyesterpolyole sind solche auf Basis von Adipinsäure, Phthalsäure, Isophthalsäure und Tetrahydrophthalsäure als Säurekomponente und Ethylenglykol, Diethylenglykol, Triethylenglykol; 1,4- oder 1,3-Butandiol, 1,6-Hexandiol und/oder Trimethylolpropan als Alkoholkomponente.

Ebenfalls bevorzugt als Dispergiermedium sind hydroxylgruppenaufweisende Polycarbonate, bevorzugt Polycarbonatdiole, mit zahlenmittleren Molekulargewichten Mₙ von 400 bis 8000 g/mol, bevorzugt 600 bis 3000 g/mol eingesetzt werden. Diese sind durch Reaktion von Kohlensäurederivaten, wie Diphenylcarbonat, Dimethylcarbonat oder Phosgen, mit Polyolen, bevorzugt Diolen, erhältlich. Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A und lactonmodifizierte Diole der vorstehend genannten Art in Frage. Bevorzugt enthält die Diolkomponente 40 bis 100 Gew.-% Hexandiol, bevorzugt sind 1,6-Hexandiol und/oder Hexandiolderivate. Solche Hexandiolderivate basieren auf Hexandiol und weisen neben endständigen OH-Gruppen Ester- oder Ethergruppen auf. Solche Derivate sind durch Reaktion von Hexandiol mit überschüssigem Caprolacton oder durch Veretherung von Hexandiol mit sich selbst zum Di- oder Trihexylenglykol erhältlich. Statt oder zusätzlich zu reinen Polycarbonatdiolen können auch Polyether-Polycarbonatdiole in eingesetzt werden. Hydroxylgruppenaufweisende Polycarbonate sind bevorzugt linear gebaut, können aber auch durch den Einbau polyfunktioneller Komponenten, insbesondere niedermolekularer Polyole, leicht erhalten werden. Hierzu eignen sich beispielsweise Glycerin, Trimethylolpropan, Hexantriol-1,2,6, Butantriol-1,2,4, Trimethylolpropan, Trimethylolethan, Pentaerythrit, Chinit, Mannit, Sorbit, Methylglykosid oder 1,3,4,6-Dianhydrohexite. Bevorzugte Polycyarbonate werden aus Diphenylcarbonat bzw. Dimethylcarbonat und 1,6-Hexandiol, 1,4-Butandiol und Methyl-1,3-propandiol aufgebaut.

Als Dispergiermedium können bevorzugt auch Polyetherpolyole eingesetzt werden. Geeignet sind beispielsweise die in der Polyurethanchemie an sich bekannten Polytetramethylenglykolpolyether wie sie durch Polymerisation von Tetrahydrofuran mittels kationischer Ringöffnung erhältlich sind. Ebenfalls geeignete Polyetherpolyole sind die an sich bekannten Additionsprodukte von Styroloxid, Ethylenoxid, Propylenoxid, Butylenoxide und/oder Epichlorhydrins an di- oder polyfunktionelle Startermoleküle. Als geeignete Startermoleküle können alle dem Stand der Technik nach bekannten Verbindungen eingesetzt werden, wie zum Beispiel Wasser, Butyldiglykol, Glycerin, Diethylenglkol, Trimethyolpropan, Propylenglykol, Sorbit, Ethylendiamin, Triethanolamin, 1,4-Butandiol. Besonders bevorzugt ist der Einsatz von Polyetherpolyolen, die aufgebaut sind aus Ethylenoxid, Propylenoxid und Butylenoxid.

Das Polyol bzw. Polyolgemisch B) enthaltend die Nanoharnstoffpartikel wird bevorzugt hergestellt, indem das Polyol bzw. Polyolgemisch, welches durchschnittlich mindestens zwei gegenüber Isocyanatgruppen reaktive Gruppen aufweist, mit einer wässrigen Nanoharnstoff-Dispersion vermischt wird und anschließend in einem zweiten Schritt das Wasser entfernt wird, oder alternativ indem das Wasser gleichzeitig zum Mischvorgang entfernt wird. Die dafür einzusetzenden wässrigen Nanoharnstoff-Dispersionen sind in der WO2005/063873 beschrieben.

Die wässrige Nanoharnstoff-Dispersion und das Dispergiermedium können in beliebiger Reihenfolge vermischt werden, es kann eine Komponente kontinuierlich, portionsweise oder auf einmal zu der anderen Komponente hinzugefügt werden. In einer bevorzugten Verfahrens-Variante werden das Dispergiermedium und die wässrige Nanoharnstoff-Dispersion zuerst vollständig miteinander vermischt und anschließend wird das Wasser aus der Mischung entfernt.

Prinzipiell ist die Entfernung des Wassers bei Atmosphärendruck, Unterdruck oder Überdruck möglich. In einer besonders bevorzugten Verfahrens-Variante wird das Wasser destillativ entfernt, wobei unter Druckverminderung und/oder unter Temperaturerhöhung gearbeitet wird.

Auch andere Techniken zur Abtrennung von Wasser sind möglich, wie beispielsweise die Entwässerung durch Membranverfahren oder der Einsatz wasserziehender Trockenmittel, wie z.B Silicagel oder Zeolithe. Auch die Kombination verschiedener Entwässerungstechniken, gleichzeitig oder nacheinander, ist möglich. Auch die Abtrennung des Wassers unter Zuhilfenahme von Additiven ist möglich, beispielsweise die Zumischung von Schleppmitteln zur vereinfachten destillativen Entfernung von Wasser.

Im bevorzugten Verfahren erfolgt die Durchmischung der wässrigen Nanoharnstoff-Dispersion mit dem nicht-wässrigen Dispergiermedium bevorzugt mittels Durchmischung durch ein Rührwerk. Andere Arten der Durchmischung wie z.B. durch Umpumpen, Statikmischer, Schüttler, Rotation eines Gefäßes, Stachelmischer, Düsenstrahldispergator, Rotor und Stator, oder durch Einfluss von Ultraschall sind auch möglich. Die Durchmischung erfolgt bei Temperaturen die zwischen 0°C und 150°C, bevorzugt zwischen 10°C und 120°C und besonders bevorzugt zwischen 20°C und 100°C liegen. Es wird bei Temperaturen gearbeitet, bei denen das Dispergiermedium als Flüssigkeit vorliegt.

Bei Abtrennung des Wassers durch Destillation wird bei Temperaturen zwischen 20°C und 200°C, bevorzugt zwischen 25°C und 150°C und besonders bevorzugt zwischen 40°C und 100°C gearbeitet. Falls die Entfernung des Wasser unter Vakuum erfolgt, liegt der eingestellte Druck in der Regel zwischen 1 und 900 mbar, bevorzugt zwischen 2 und 500 mbar, besonders bevorzugt zwischen 5 und 100 mbar. Auch das Durchlaufen von Temperatur- und/oder Druckprofilen ist möglich. Als Dauer der Entwässerung eignen sich beispielsweise Zeiten zwischen 10 Minuten und 24 Stunden, bevorzugt zwischen 30 Minuten und 16 Stunden. Während der Entfernung des Wassers wird die Mischung bevorzugt weiter durchmischt, beispielsweise durch Rühren und/oder Umpumpen.

In einer besonders bevorzugten Variante des erfindungsgemäßen Verfahrens wird das flüssige oder aufgeschmolzene Dispergiermedium in einer Rührapparatur vorgelegt und unter intensivem Rühren die wässrige Nanoharnstoff-Dipsersion zugetropft, wobei bevorzugte Dosierzeiten eine Minute bis 10 Stunden, bevorzugt 10 Minuten bis 5 Stunden betragen und anschließend eine Stunde bis 10 Stunden nachgerührt wird, danach das Wasser aus der Dispersion durch Destillation entfernt und die Dispersion unter Duckverminderung getrocknet wird.

Bei der Herstellung der Nanoharnstoff-Dispersion können auch Colöser, Entschäumer, oberflächenaktive Detergentien und andere Hilfsmittel und Additive verwendet werden. Werden flüchtige Colösemittel eingesetzt, können diese wieder aus der Nanoharnstoff-Dispersion entfernt werden, beispielsweise zusammen mit der Entfernung des Wassers.

Wässrige Nanoharnstoff-Dispersionen sind erhältlich, indem hydrophilierte Polyisocyanate in Wasser eingebracht werden und anschließend die vorliegenden freien Isocyanatgruppen durch eine Isocyanat-Wasser-Reaktion zum primären Amin abgebaut. Diese Aminogruppen bilden dann durch Abreaktion mit weiteren Isocyanatgruppen Harnstoffgruppen und vernetzen dadurch zu Nanoharnstoff-Partikeln, in Form wässriger Dispersionen. Prinzipiell ist es möglich, dass NCO-Gruppen der hydrophilierten Polyisocyanate vor oder während der Reaktion mit Wasser auch mit anderen isocyanatreaktiven Verbindungen wie primären oder sekundären Aminen und/oder Alkoholen umgesetzt werden.

Als hydrophilierte Polyisocyanate können an sich alle dem Fachmann bekannten NCOgruppenhaltigen Verbindungen eingesetzt werden, die nichtionisch oder potentiell ionisch hydrophiliert sind. Werden Mischungen verschiedener Polyisocyanate der vorstehend genannten Art eingesetzt, ist es bevorzugt, dass mindestens ein Polyisocyanat eine nichtionisch hydrophilierende Struktureinheit aufweist. Besonders bevorzugt werden ausschließlich Polyisocyanate mit nichtionisch hydrophilierenden Gruppen eingesetzt.

Unter ionisch bzw. potentiell ionisch hydrophilierende Verbindungen werden sämtliche Verbindungen verstanden, die mindestens eine isocyanatreaktive Gruppe sowie mindestens eine Funktionalität, wie z.B. -COOY, -SO₃Y, -PO(OY)₂ (Y beispielsweise = H, NH₄⁺, Metallkation), -NR₂, -NR₃⁺ (R = H, Alkyl, Aryl), aufweisen, die bei Wechselwirkung mit wässrigen Medien ein pH-Wert-abhängiges Dissoziationsgleichgewicht eingeht und auf diese Weise negativ, positiv oder neutral geladen sein kann. Bevorzugte isocyanatreaktive Gruppen sind Hydroxyl- oder Aminogruppen.

Solche Polyisocyanate sind nach dem Fachmann bekannten Methoden erhältlich, in dem Polyisocyanate mit nichtionisch und/oder ionisch bzw. nichtionisch oder potentiell ionisch hydrophilierenden Verbindungen, welche jeweils wenigstens eine isocyanatreaktive Gruppe aufweisen, umgesetzt werden.

Geeignete ionisch oder potentiell ionisch hydrophilierende Verbindungen sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-ß-alanin, 2-(2-Amino-ethylamino)-ethansulfonsäure, Ethylendiamin-propyl- oder -butylsulfonsäure, 1,2- oder 1,3-Propylendiamin-ß-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie Verbindungen, die in kationische Gruppen überführbare, z.B. Amin-basierende, Bausteine wie N-Methyl-diethanolamin als hydrophile Aufbaukomponenten enthalten. Weiterhin kann Cyclohexylaminopropansulfonsäure (CAPS) wie z.B. in der WO2001/88006 als hydrophilierende Verbindung bzw. Baustein verwendet werden.

Bevorzugte ionische oder potentielle ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-ß-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierende Verbindungen sind z.B. Polyoxyalkylenether, die mindestens eine Hydroxy- oder Aminogruppe enthalten. Diese Polyether enthalten bevorzugt einen Anteil von 30 Gew.-% bis 100 Gew.-% bezogen auf den Gesamtgehalt an Alkylenoxid-Einheiten an Ethylenoxid-Einheiten.

Bevorzugte nichtionisch hydrophilierende Verbindungen sind solche der Formel (I),

H-Y'-X-Y-R (I)

in welcher
- R: für einen einwertigen Kohlenwasserstoffrest mit 1 bis 12 Kohlenstoffatomen, bevorzugt einen unsubstituierten Alkylrest mit 1 bis 4 Kohlenstoffatomen steht,
- X: für eine Polyalkylenoxidkette mit 5 bis 90, bevorzugt 20 bis 70 Kettengliedern, welche zumindest zu 40 Gew.-%, bevorzugt zumindest zu 65 Gew.-%, besonders bevorzugt von 55 bis 89 Gew.-% bezogen auf den Gesamtgehalt an Alkylenoxid-Einheiten aus Ethylenoxid-Einheiten bestehen und die neben Ethylenoxid-Einheiten Propylenoxid-, Butylenoxid- oder Styroloxid-Einheiten aufweisen können, wobei Propylenoxid-Einheiten bevorzugt sind, steht und
- Y', Y: für Sauerstoff oder auch für -NR'- steht, wobei R' = R oder H ist.

Bevorzugt entsprechen die nichtionisch hydrophilierende Verbindungen der vorstehend genannten Art, wobei sie ein zahlenmittleres Molekulargewicht von mindestens 400 g/mol, bevorzugt von mindestens 500 g/mol und besonders bevorzugt von 1200 bis 4500 g/mol aufweisen.

Zur Herstellung der erfindungswesentlichen hydrophilierten Polyisocyanate können die dem Fachmann an sich bekannten aliphatischen, cycloaliphatischen, araliphatischen und aromatischen Polyisocyanate mit mehr als einer NCO-Gruppe pro Molekül und einem Isocyanatgehalt von 0,5 bis 50 Gew.-%, bevorzugt 3 bis 30 Gew.-%, besonders bevorzugt 5 bis 25 Gew.-% oder deren Gemische eingesetzt werden.

Beispiele geeigneter Polyisocyanate sind Butylendüsocyanat, Tetramethylendiisocyanat, Cyclohexan-1,3- und 1,4-diisocyanat, Hexamethylendiisocyanat (HDI), 1-Isocanato-3,3,5-trimethyl-5-isocyanato-methylcyclohexan (Isophorondiisocyanat, IPDI), 2,4,4-Trimethylhexamethylendiisocyanat, Isocyanatomethyl-1,8-octandiisocyanat, Methylen-bis-(4-isocyanatocyclohexan), Tetramethylxylylendiisocyanat (TMXDI) oder Triisocyanatononan (TIN, 4-Isocyanatomethyl-1,8-octandiisocyanat) sowie deren Mischungen. Prinzipiell geeignet sind auch aromatische Polyisocyanate wie 1,4-Phenylendiisocyanat, 2,4-und/oder 2,6-Toluylendiisocyanat (TDI), Diphenylmethan-2,4'-und/oder 4,4'-diisocyanat (MDI), Triphenylmethan-4,4'-diisocyanat oder Naphthylen-1,5-diisocyanat.

Neben den vorstehend genannten Polyisocyanaten können auch höhermolekulare Folgeprodukte mit Uretdion-, Isocyanurat-, Urethan-, Allophanat-, Biuret-, Iminooxadiazindion- und/oder Oxadiazintrionstruktur eingesetzt werden. Solche Folgeprodukte sind in an sich bekannter Weise aus den monomeren Diisocyanaten durch die im Stand der Technik beschriebene Modifizierungsreaktionen bekannt.

Bevorzugt sind hydrophilierte Polyisocyanate oder deren Gemische mit ausschließlich aliphatisch oder cycloaliphatisch gebundenen Isocyanatgruppen.

Besonders bevorzugt basieren die hydrophilierten Polyisocyanate auf Hexamethylendiisocyanat, Isophorondiisocyanat, den isomeren Bis-(4,4'-isocyanatocyclohexyl)methanen sowie Mischungen der vorgenannten Diisocyanate, wobei im Fall von Mischungen solche mit 50 Gew.-Anteilen an Polyisocyanaten auf Basis von Hexamethylendiisocyanat bevorzugt sind.

Einbringung der hydrophilierten Polyisocyanate in Wasser und die anschließende Reaktion mit Wasser zur Herstellung der Nanoharnstoffdispersionen erfolgt bevorzugt unter Durchmischung durch ein Rührwerk oder andere Arten der Durchmischung wie Umpumpen, Statikmischer, Stachelmischer, Düsenstrahldispergator, Rotor und Stator oder unter Einfluss von Ultraschall.

Grundsätzlich kann während oder nach der Dispergierung noch eine Modifizierung von NCO-Gruppen mit isocyanatreaktiven Verbindungen wie primären oder sekundären Aminen oder (Poly-)Alkoholen erfolgen. Beispiele sind Ethylendiamin, 1,3-Propylendiamin, 1,6-Hexamethylendiamin, Isophorondiamin, 4,4'-Diaminodicyclohexylmethan, Hydrazin, 1,4-Butandiol, 1,4-Cyclohexandimethanol, 1,6-Hexandiol, Trimethylolethan, Trimethylolpropan, Glycerin, N-Methylethanol- und N-Methylisopropanolamin, 1-Amino-propanol oder Diethanolamin.

Bevorzugt beträgt das molekulare Verhältnis von NCO-Gruppen der hydrophilierten Polyisocyanate zu Wasser 1 zu 100 bis 1 zu 5, besonders bevorzugt 1 zu 30 bis 1 zu 10.

Grundsätzlich ist es möglich die hydrophilierten Polyisocyanate in einer Portion in das Wasser einzubringen. Ebenfalls ist eine kontinuierliche Zugabe des hydrophilierten Polyisocyanates, beispielsweise über einen Zeitraum von 30 Minuten bis 20 Stunden möglich.

Bevorzugt ist eine portionsweise Zugabe, wobei die Anzahl der Portionen 2 bis 50, bevorzugt 3 bis 20, besonders bevorzugt 4 bis 10 beträgt, und die Portionen gleich oder auch unterschiedlich groß sein können.

Die Wartezeit zwischen den einzelnen Portionen beträgt typischerweise 5 Minuten bis 12 Stunden, bevorzugt 10 Minuten bis 8 Stunden, besonders bevorzugt 30 Minuten bis 5 Stunden.

Ebenfalls möglich ist eine über einen Zeitraum von 1 Stunde bis 24 Stunden, bevorzugt 2 Stunden bis 15 Stunden verteilte kontinuierliche Zugabe der hydrophilierten Polyisocyanat.

Bei der Harnstoffpartikelherstellung beträgt die Kesseltemperatur 10 bis 80°C, bevorzugt 20 bis 70°C und besonders bevorzugt 25 bis 50°C.

Bevorzugt wird im Anschluss an die Umsetzung des hydrophilierten Polyisocyanats mit Wasser der Reaktor bei Innentemperaturen von 0°C bis 80°C, bevorzugt 20°C bis 60°C und besonders bevorzugt 25°C bis 50°C evakuiert. Die Evakuierung erfolgt bis zu einen Innendruck von 1 bis 900 mbar, bevorzugt 10 bis 800 mbar, besonders bevorzugt 100 bis 400 mbar. Die Dauer dieses sich an die eigentliche Reaktion anschließenden Entgasung beträgt 1 Minute bis 24 Stunden, bevorzugt 10 Minuten bis 8 Stunden. Eine Entgasung ist auch durch Temperaturerhöhung ohne Evakuierung möglich.

Bevorzugt wird gleichzeitig mit der Evakuierung die Nanoharnstoff-Dispersion durchmischt, z.B. durch Rühren.

Die Herstellung der wässrigen Nanoharnstoff-Dispersion kann in Anwesenheit von Katalysatoren erfolgen.

Geeignete Katalysatoren hierfür sind z.B. Ammoniak, Eisen(II)-chlorid, Zinkchlorid, Zinnsalze, Tetraalkylammoniumhydroxide, Alkalihydroxide, Alkalialkoholate, Alkalisalze von langkettigen Fettsäuren mit 10 bis 20 Kohlenstoffatomen und gegebenenfalls seitenständigen OH-Gruppen, Bleioctoat oder tertiäre Amine wie Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)harnstoff, N-Methyl- bzw. N-Ethylmorpholin, N,N'-Dimorpholinodiethylether (DMDEE), N-Cyclohexylmorpholin, N,N,N',N'-Tetramethylethylendiamin, N,N,N',N'-Tetramethylbutandiamin, N,N,N',N'-Tetramethylhexandiamin- 1,6, Pentamethyldiethylentriamin, Dimethylpiperazin, N-Dimethylaminoethylpiperidin, 1,2-Dimethylimidazol, N-Hydroxypropylimidazol, 1-Azabicyclo-(2, 2,0)-octan, 1,4-Diazabicyclo-(2,2,2)-octan (Dabco) oder Alkanolaminverbindungen, wie Triethanolamin, Triisopropanolamin, N-Methyl- und N-Ethyl-diethanolamin, Dimethyl-aminoethanol, 2-(N,N-Dimethylaminoethoxy)ethanol oder N-Tris-(dialkylaminoalkyl)hexahydrotriazine, z.B. N,N',N-Tris-(dimethylaminopropyl)-s-hexahydrotriazin. Bei Einsatz von tert. Aminen ist es möglich, den Katalysator nach der Herstellung der Nanoharnstoff-Dispersion wieder abzutrennen, beispielsweise durch Destillation.

Bevorzugt sind Zinndioctoat, Zinndiethylhexoat, Dibuthylzinndilaurat oder Dibutyldilaurylzinnmercaptid, 3-Dimethyl-3,4,5,6-tetrahydropyrimidin, Tetramethylammoniumhydroxid, Triethylamin, Natriumhydroxid, Natriummethylat oder Kaliumisopropylat. Besonders bevorzugter Katalysator ist Ammoniak.

Die Katalysatoren werden in Mengen von 0,01 bis 8 Gew.-%, bevorzugt von 0,05 bis 5 Gew.-%, besonders bevorzugt von 0,1 bis 3 Gew.-%, bezogen auf den gesamten Festkörpergehalt der resultierenden Dispersion, eingesetzt.

Der Katalysator kann mit den hydrophilierten Polyisocyanaten vor Einbringung in das Wasser oder mit dem Dispergierwasser gemischt werden oder auch erst nach der Dispergierung der hydrophilierten Polyisocyanate in Wasser zugefügt werden. Bevorzugt ist es, den Katalysator dem Dispergierwasser vor Zusatz der hydrophilierten Polyisocyanate beizumischen. Es ist auch möglich den Katalysator in Portionen aufzuteilen und zu unterschiedlichen Zeitpunkten des Reaktionsverlaufes hinzuzufügen.

Bei der Herstellung des Polyols bzw. Polyolgemisches B) enthaltend Nanoharnstoffe können auch Entschäumer, oberflächenaktive Detergentien und andere Hilfsmittel und Additive verwendet werden. Auch weitere Additive aus Bereichen wie Lack-, Dichtstoff - oder Klebstoffformulierung wie beispielsweise Pigmente oder Füllstoffe können zugesetzt werden.

### Beispiele:

Sofern nicht abweichend vermerkt beziehen sich alle Prozentangaben auf Gewichtsprozent.

Sofern nicht abweichend vermerkt, beziehen alle analytischen Messungen auf Temperaturen von 23°C.

Die angegebenen Partikelgrößen wurden mittels Laserkorrellationsspektroskopie (Gerät: Malvern Zetasizer 1000, Malver Inst. Limited) bestimmt.

Die Kontrolle auf freie NCO-Gruppen wurde mittels IR-Spektroskopie (Bande bei 2260 cm-1) durchgeführt.

Die Wasserbestimmung erfolgte mittels Karl-Fischer-Tritration nach DIN 51777 Teil 1. Bei Anwesenheit von Aminen wird eine Pufferung mit Benzoesäure durchgeführt.

### Chemikalien

Bayhydur^{®} VP LS 2336 (Bayer MaterialScience AG, Lev., DE):
   Hydrophiliertes Polyisocyanat auf Basis von Hexamethylendiisocyanat, lösemittelfrei, Viskosität ca. 6800 mPa s, IsocyanatGehalt ca. 16,2%, Bayer MaterialScience AG, Leverkusen, DE.
Isofoam^{®} 16 (Petrofer-Chemie, Hildesheim, DE):

### Entschäumer

Die anderen Chemikalien wurden im Feinchemikalienhandel bei Sigma-Aldrich GmbH, Taufkirchen, DE bezogen

### Herstellung einer wässrigen Nanoharnstoff-Dispersion N)

Zu einer Lösung von 20,72 g Triethylamin in 4952 g entionisiertem Wasser wurden bei 30°C unter heftigem Rühren 820,20 g Bayhydur^{®} VP LS 2336 und anschließend 0,32 g Isofoam^{®} 16 gegeben und weiter gerührt. Nach 3, 6 und 9 Stunden wurden jeweils weitere 820,20 g Bayhydur^{®} VP LS 2336 und je anschließend 0,32 g Isofoam^{®} 16 zugesetzt und anschließend bei 30°C weitere 4 Stunden nachgerührt. Danach wurde bei 200 mbar Vakuum und 30°C weiter 3 Stunden gerührt und die entstandene Dispersion abgefüllt.

Die erhaltene weiße wässrige Dispersion hatte die nachfolgenden Eigenschaften:

| | |
|---|---|
| Partikelgröße (LKS): | 83 nm |
| Viskosität (Viskosimeter, 23°C): | < 50 mPas |
| pH (23°C): | 8,33 |

In den Beispielen und Vergleichsbeispielen wurden die folgenden Polyole verwendet:

### Polyester A:

Polyesterpolyol auf Basis von Adipinsäure und 1,6-Hexandiol mit einer Hydroxylzahl von etwa 30 mg KOH/g und einer Säurezahl von etwa 0,5 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyester B:

In einer Rührapparatur mit Destillationsaufsatz werden 500 g eines Polyesters A) bei 55°C vorgelegt. Unter Rühren werden innerhalb von 20 Minuten 39,6 g der Dispersion N) zugetropft. Es wird unter Rühren auf ca. 20 mbar evakuiert. Die Temperatur des Heizbades wird schrittweise bis 100°C erhöht, bis kein Wasser mehr überdestilliert wird. Anschließend wird bei 70°C am Rotationsverdampfer noch ca. 3 Stunden bei ca. 1 mbar weiter evakuert. Der Wassergehalt (entsprechend Karl-Fischer) lag bei 0,075%.

### Polyester C:

In einer Rührapparatur mit Destillationsaufsatz werden 1800 g eines Polyesters A) bei 60°C vorgelegt. Unter Rühren werden innerhalb von 30 Minuten 460 g der Dispersion N) zugetropft. Es wird unter Rühren auf ca. 20 mbar evakuiert. Die Temperatur des Heizbades wird schrittweise bis 100°C erhöht, bis kein Wasser mehr überdestilliert wird. Anschließend wird bei gleicher Temperatur noch ca. 3 Stunden bei ca. 2 mbar weiter gerührt. Der Wassergehalt (entsprechend Karl-Fischer) lag bei 0,08%.

### Polyester D:

Polyesterpolyol auf Basis von Adipinsäure, Isophtalsäure, Neopentylglycol und Ethylenglycol mit einer Hydroxylzahl von etwa 55 mg KOH/g und einer Säurezahl von etwa 0,5 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyester E:

Polyesterpolyol auf Basis von Dodecandisäure und und 1,6-Hexandiol mit einer Hydroxylzahl von etwa 30 mg KOH/g und einer Säurezahl von etwa 0,5 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyether A

Vorano^{®} P 400, The DOW Chemical Company, Midland, MI, USA

### Stabilisator S

Irganox^{®} 1010, Ciba Spezialitätenchemie Lampertheim GmbH, Lampertheim, DE.

### Isocyanat I:

Desmodur^{®} 44M (4,4'-Diphenylmethandiisocyanat), Bayer MaterialScience AG, Leverkusen, DE

**Herstellung der reaktiven Polyurethan-Hotmelts (Beispiele u. Vergleichsbeispiele):**

Vergleichsbeispiel 1 sowie Beispiele 1 und 2 wurden mit Kennzahl = 2,20 gefahren. Zur Ermittlung der Anfangsfestigkeit einer praktisch relevanten Rezeptur enthaltend nanoharnstoffmodifizierte Polyester wurden die Urethangruppengehalte konstant eingestellt (U = 0,66 mol/kg, Beispiele 3 - 4 und Vergleichsbeispiel 2). Hieraus resultieren unterschiedliche Mengengerüste für Hotmelts enthaltend nanoharnstoffmodifizierte Polyester (Beispiele 1 - 4) im Vergleich zu Hotmelts enthaltend keine nanoharnstoffmodifizierten Polyester (Vergleichsbeispiele 1 und 2).

In einem 2 L-Planschliffbecher werden die in Tabelle 1 angegebenen Anteile an Polyol vorgelegt, bei 130°C aufgeschmolzen und dann 1h bei 130°C und 15 mbar (+/- 10 mbar) Unterdruck entwässert. Anschließend gibt man die entsprechende Stoffmenge an Isocyanat I hinzu. Nach einer Einrührzeit von ca. 20 min werden die Produkte in Alukartuschen abgefüllt und diese Luftdicht verschlossen. Die Kartuschen werden dann 4h bei 100°C im Umlufttrockenschrank getempert.

**Tabelle 1: Zusammensetzung der Beispiele und Vergleichsbeispiele:**

| **Bezeichnung** | **Edukte** | **Anteil [Gew.-%]** |
|---|---|---|
| Vergleichsbeispiel 1 | Isocyanat I | 12,48 |
| | Polyester A | 87,52 |
| Vergleichsbeispiel 2 | Isocyanat I | 15,2 |
| | Polyester A | 32,5 |
| | Polyester D | 16,2 |
| | Polyester E | 32,5 |
| | Polyether A | 3,3 |
| | Stabilisator S | 0,3 |
| Beispiel 1 | Isocyanat I | 11,84 |
| | Polyester B | 88,16 |
| Beispiel 2 | Isocyanat I | 10,57 |
| | Polyester C | 89,43 |
| Beispiel 3 | Isocyanat I | 14,2 |
| | Polyester B | 32,9 |
| | Polyester D | 16,4 |
| | Polyester E | 32,9 |
| | Polyether A | 3,3 |
| | Stabilisator S | 0,3 |
| Beispiel 4 | Isocyanat I | 12,9 |
| | Polyester C | 33,4 |
| | Polyester D | 16,7 |
| | Polyester E | 33,4 |
| | Poylether A | 3,3 |
| | Stabilisator S | 0,3 |

### Bestimmung von physikalischen Umwandlungen:

Die Bestimmung von physikalischen Umwandlungen wie Schmelzpunkten oder Glasübergangstemperaturen erfolgt über Messung der Wärmetönung mit einem Pyris Diamond DSC Kalorimeter der Firma Perkin-Elmer. Die Temperatur wird über Indium und Blei, die Wärmetönung über Indium kalibriert. Als Spülgas wird Stickstoff mit einer Flussrate von 30 mL/min verwendet. Die Kühlung erfolgt über flüssigem Stickstoff. Der Temperaturgradient beträgt 20K/min. Gemessen wird im Temperaturbereich zwischen - 100°C und +150°C. Die Probeneinwaagen betragen zwischen 9,5 und 11,4 mg Probenmasse in Al-Pfännchen (Normal-Tiegel). Die Ergebnisse sind in Tabelle 2 zusammengefasst.

### Bestimmung der Zugscherfestigkeit von Buchenholz-Verklebungen:

Zur Herstellung der Prüfkörper werden Buchenholzplatten der Größe 40 x 20 x 5 mm, die bei 23°C und 50 % rel. Feuchte gelagert werden, verwendet. Die Kartusche mit dem zu charakterisierenden Produkt wird 45 Minuten bei 120°C im Umlufttrockenschrank aufgeschmolzen und der Inhalt anschließend mit Hilfe einer Kartuschenpistole als Klebstoffraupe auf die in einer speziellen Form eingespannten Holzprüfkörper aufgetragen. Anschließend wird die Form fest verschlossen. Die Form garantiert eine Überlappungslänge von 10 mm, eine Klebfläche von 2 cm² und eine Klebfugendicke von 0,8 mm. Die Prüfkörper werden nach definierter Zeit aus der Form genommen und anschließend bei 23°C und 50 % rel. Feuchte im Zugscherversuch vermessen. Zur Bestimmung der Anfangsfestigkeiten werden die Prüfkörper nach 5, 10, 30, 60 und 120 Minuten ausgeprüft. Die Bestimmung der Endfestigkeit erfolgt nach 14 Tagen. Von jedem Produkt werden 5 Prüfkörper hergestellt, vermessen und die Einzelergebnisse gemittelt. Die Ergebnisse sind in der Tabelle 3 zusammengefasst.

### Rheologische Charakterisierung der reaktiven Polyurethan-Hotmelts:

Vor der Untersuchung werden die Produkte, welche in Alu-Kartuschen abgefüllt sind, in einem Umluftheizschrank bei ca. 125°C ca. 30 min lang aufgeschmolzen. Für die Messung der viskoelastischen Kenngrößen an Polyurethan-Hotmelts wird bei der festen Frequenz von 1 Hz gemessen. Für die Messung bei konstanter Abkühlrate wird die Temperatur von 130°C auf 0°C mit 2 K/min abgesenkt. Da die Proben beim Abkühlen schrumpfen, muss die Messung mit einem Rheometer durchgeführt werden, welches über eine "Auto Tension Funktion" verfügt. Zur Auswertung wurde die Temperatur bei zwei verschiedenen Speichermoduli (G') herangezogen. Dabei wurden die aus der Literatur für "pressure sensitive adhesives" bekannten obere und untere Grenze des Dahlquist Bandes gewählt (G'= 5*104 mPas bzw. G'= 5*105 mPas).

Da die Abkühlrate von 2 K/min nicht der realen Abkühlrate eine Hotmelts bei der Applikation entspricht werden Setting-Messungen durchgeführt, die eine deutlich höhere Abkühlrate aufweisen. Für die Setting-Messung wird das aufgeschmolzene, heiße PUR-Hotmelt zügig in den kalten (Raumtemperatur) Messbehälter überführt und sofort bei Raumtemperatur rheologisch vermessen. Die Abkühlrate resultiert demnach aus der Abkühlung durch die Umgebungstemperatur und liegt in der ersten Minute bei ca. 40 - 80 K/min. Das rheologische Verhalten wird über die Zeit aufgenommen. Als Maß für den Festigkeitsaufbau des Systems wurde die Zeit bis zum erreichen eines Moduls von G'= 1 * 106 mPas gewählt.

Die Charakterisierung der viskoelastischen Eigenschaften der reaktiven Polyurethan-Hotmelts erfolgt mit dem Rheometer VOR-Melt der Fa. BOHL1N Instruments mittels Oszillationsprogramm und dem Platte/Platte-System 25HT. Das Gerät dient zur Charakterisierung der viskoelastischen Eigenschaften von hochviskosen Substanzen wie Kunststoffschmelzen, Kautschuken usw. in Abhängigkeit von der Temperatur und der Frequenz.

### Ergebnisse:

Die aus DSC-Untersuchungen erhaltenen Übergangstemperaturen für die reinen Polyester und Nanoharnstoff enthaltenden Polyester sind in Tabelle 2 aufgeführt. Die Zugscherfestigkeiten aus der Charakterisierung von Buchenholz-Verklebungen sind in Tabelle 3 und die rheologischen Charakterisierungen in Tabelle 4 zusammengefasst.

**Tabelle 2: Übergangstemperaturen von Polyestern enthaltend Nanoharnstoffe:**

| **Polyester** | **Tₘ [°C]** | **Tₖᵣᵢₛₜ [°C]** | **A Hₖᵣᵢₛₜ [J/g]** |
|---|---|---|---|
| A | 56,8 | 38,0 | -92,3 |
| B | 54,8 | 36,0 | -83,3 |
| C | 56,0 | 38,5 | -78,3 |

**Tabelle 3: Zugscherfestigkeiten von Buchenholzverklebungen in N/mm2 nach Aushärtung bei 23°C und 50 % rel. Feuchte und verschiedenen Aushärtezeiten.**

| **Zeit [min]** | | **Vergleichsbeispiel 1** | **Vergleichsbeispiel 2** | **Beispiel 1** | **Beispiel 2** | **Beispiel 3** | **Beispiel 4** |
|---|---|---|---|---|---|---|---|
| 5 | [MPa] | 1,93 | 2,36 | 2,92 | 2,18 | 2,88 | 3,83 |
| 10 | [MPa] | 2,18 | 3,10 | 2,99 | 2,99 | 3,31 | 4,65 |
| 30 | [MPa] | 2,36 | 3,27 | 3,17 | 5,34 | 4,11 | 5,17 |
| 60 | [MPa] | 2,95 | 3,94 | 4,05 | 5,45 | 4,39 | 5,29 |
| 120 | [MPa] | 3,45 | 3,80 | 4,50 | 6,85 | 5,02 | 5,62 |

**Tabelle 4: Abkühlverhalten von reaktiven PU Hotmelts bei verschiedenen Abkühlraten. (Konstante Abkühlrate von 2K/min und nach Setting-Versuch (Starttemperaturen jew. 130°C):**

| | **Konstante Abkühlrate** | | **Setting-Versuch** |
|---|---|---|---|
| | **G' = 5*10⁴ Pa [°C]** | **G'=5*10⁵ Pa [°C]** | **G' = 1*10⁶ Pa [°C]** |
| Vergleichsbeispiel 1 | 40,5 | 39,5 | 17,0 |
| Beispiel 1 | 42,0 | 41,0 | 16,0 |
| Beispiel 2 | 43,5 | 41,5 | 11,0 |
| Vergleichsbeispiel 2 | 52,7 | 50,6 | 10,4 |
| Beispiel 3 | 53,6 | 52,0 | 10,3 |
| Beispiel 4 | 53,7 | 52,0 | 10,1 |

### Diskussion der Ergebnisse:

In Tabelle 2 sind die über DSC gemessenen Übergangstemperaturen des reinen Polyesters A ohne Nanoharnstoffmodifizierung und denen der reinen Polyester B und C enthaltend Nanoharnstoff gegenübergestellt. Es wird deutlich, dass die Nanoharnstoffe keinen signifikanten Einfluss auf die Schmelztemperatur zeigen. Bei Betrachtung der Kristallisationstemperaturen ist ebenfalls kein signifikanter Einfluss erkennbar.

In Zugscherversuchen werden allerdings überraschend verbesserte Festigkeiten für Hotmelts enthaltend Nanoharnstoff modifizierten Polyester ermittelt (Tabelle 3).

Auch ist eine überraschend erhöhte Anfangsfestigkeit eines Hotmelts enthaltend Nanoharnstoff modifizierten Polyester, im Vergleich zu einem Hotmelt enthaltend kein Nanoharnstoff modifizierten Polyester, über rheologische Analysenmethoden zu beobachten (Tabelle 4). Die obere und untere Grenze des Dahlquistkriteriums wird bei einer konstanten Abkühlrate mit Hotmelts enthaltend enthaltend Nanoharnstoff modifizierten Polyester (Beispiele 1 - 4) bei höheren Temperaturen erreicht, als für Hotmelts enthaltend kein Nanoharnstoff modifizierten Polyester (Vergleichsbeispiele 1 und 2). Auch bei hohen Abkühlraten (Setting-Versuch) wird der Effekt des nanoharnstoffmodifizierten Polyesters auf die Anfangsfestigkeit deutlich.

Die Anwesenheit von Nanoharnstoff in niedermolekularen NCO-terminierten Polyurethanprepolymeren stellt einen entscheidenden Vorteil in der Anwendung dar, da diese Systeme aufgrund ihrer erhöhten Rekristallisationsneigung bereits früh den Dahlquistbereich erreichen. Damit besitzen sie im Vergleich zu den bisherigen Systemen früher ausreichende Anfangsfestigkeiten, um die zu verklebenden Substrate in ihre Position ohne mechanische Fixierung halten zu können.

## Patentansprüche

1. Zubereitungen auf Basis von Reaktionsprodukten von (A) Isocyanaten mit (B) kristallinen oder teilkristallinen Polyesterpolyolen, gegebenenfalls in Abmischung mit kristallinen, teilkristallinen, amorphen oder flüssigen Polyolen anderer Art oder anderen Komponentenenthaltend mindestens ein Umsetzungsprodukt von
A) mindestens einem aromatischen, aliphatischen, araliphatischen und/oder cycloaliphatischen Isocyanat, bevorzugt mit einem Gehalt an freien NCO-Gruppen von 5 bis 60 Gew.-% (bezogen auf A)
und
B) einem Polyol bzw. Polyolgemisch enthaltend mindestens ein Polyol sowie 0,001 bis 50 Gew.% bzgl. der Gesamtmenge B) an Nanoharnstoff,
wobei das Verhältnis von A zu B so gewählt wird, dass das molare Verhältnis von NCO zu OH > 1 beträgt.

2. Zubereitungen gemäß Anspruch 1 in denen das Verhältnis von A zu B so gewählt wird, dass das molare Verhältnis von NCO zu OH 1,2 bis 4,0 beträgt.

3. Verwendung von Zubereitungen gemäß Ansprüchen 1 bis 2 als Beschichtungsmittel

4. Verwendung von Zubereitungen gemäß Ansprüchen 1 bis 2 als Schaumstoff.

5. Verwendung von Zubereitungen gemäß Ansprüchen 1 bis 2 als Dichtstoff.

6. Verwendung von Zubereitungen gemäß Ansprüchen 1 bis 2 als Klebstoff.

7. Verwendung von Zubereitungen gemäß Ansprüchen 1 bis 2 als Schmelzklebstoff.

8. Verwendung von Zubereitungen gemäß Ansprüchen 1 bis 2 als Papierklebstoff

9. Verfahren zur Herstellung von Zubereitungen gemäß Ansprüchen 1 bis 2, **dadurch gekennzeichnet, dass** die Polyole B) und die Isocyanate A) vermischt werden, wobei das Verhältnis von A zu B so gewählt wird, dass das molare Verhältnis von NCO zu OH > 1 beträgt und die so erhaltene homogene Mischung sogleich abgefüllt oder bis zum Erhalt eines konstanten NCO-Wertes gerührt und dann abgefüllt wird.

## Claims

1. Preparations based on the reaction products of (A) isocyanates with (B) crystalline or semicrystalline polyester polyols, optionally blended with crystalline, semicrystalline, amorphous or liquid polyols of other kinds or other components, comprising at least one reaction product of
A) at least one aromatic, aliphatic, araliphatic and/or cycloaliphatic isocyanate, preferably having a free NCO groups content of 5 to 60 wt% (based on A)
and
B) a polyol or polyol mixture comprising at least one polyol
and also 0.001 to 50 wt%, based on the total amount of B), of nanourea,
the ratio of A to B being selected such that the molar ratio of NCO to OH is > 1.

2. Preparations according to Claim 1, wherein the ratio of A to B is selected such that the molar ratio of NCO to OH is 1.2 to 4.0.

3. Use of preparations according to Claims 1 to 2 as coating material.

4. Use of preparations according to Claims 1 to 2 as foam.

5. Use of preparations according to Claims 1 to 2 as sealant.

6. Use of preparations according to Claims 1 to 2 as adhesive.

7. Use of preparations according to Claims 1 to 2 as hotmelt adhesive.

8. Use of preparations according to Claims 1 to 2 as paper adhesive.

9. Method for producing preparations according to Claims 1 to 2, **characterized in that** the polyols B) and the isocyanates A) are mixed, the ratio of A to B being selected such that the molar ratio of NCO to OH is > 1, and the resulting homogeneous mixture is immediately dispensed or is stirred until a constant NCO value is obtained and is then dispensed.

## Revendications

1. Préparations à base de produits de réaction de (A) des isocyanates avec (B) des polyester-polyols cristallins ou partiellement cristallins, éventuellement en mélange avec des polyols cristallins, partiellement cristallins, amorphes ou liquides d'un autre type ou d'autres composants, contenant au moins un produit de réaction de
A) au moins un isocyanate aromatique, aliphatique, araliphatique et/ou cycloaliphatique, de préférence ayant une teneur en groupes NCO libres de 5 à 60 % en poids (par rapport à A)
et
B) un polyol ou un mélange de polyols contenant au moins un polyol, ainsi que 0,001 à 50 % en poids, par rapport à la quantité totale de B), d'une nano-urée,
le rapport entre A et B étant choisi de manière à ce que le rapport molaire entre NCO et OH soit > 1.

2. Préparations selon la revendication 1, dans lesquelles le rapport entre A et B est choisi de manière à ce que le rapport molaire entre NCO et OH soit de 1,2 à 4,0.

3. Utilisation de préparations selon les revendications 1 à 2 en tant qu'agent de revêtement.

4. Utilisation de préparations selon les revendications 1 à 2 en tant que mousse.

5. Utilisation de préparations selon les revendications 1 à 2 en tant qu'agent d'étanchéité.

6. Utilisation de préparations selon les revendications 1 à 2 en tant qu'adhésif.

7. Utilisation de préparations selon les revendications 1 à 2 en tant qu'adhésif thermofusible.

8. Utilisation de préparations selon les revendications 1 à 2 en tant qu'adhésif pour papier.

9. Procédé de fabrication de préparations selon les revendications 1 à 2, **caractérisé en ce que** les polyols B) et les isocyanates A) sont mélangés, le rapport entre A et B étant choisi de manière à ce que le rapport molaire entre NCO et OH soit > 1, et le mélange homogène ainsi obtenu est aussitôt mis en bouteilles ou agité jusqu'à l'obtention d'une valeur NCO constante, puis mis en bouteilles.
